# DEMANDE DE BREVET EUROPEEN

(11) **EP 2 472 921 A1**
(43) Date de publication de la demande: **04.07.2012**
(21) Numéro de dépôt: 10306540.5
(22) Date de dépôt: 30.12.2010
(51) Int. Cl.: H04W 8/18

(54) **Procédé de personnalisation d'un UICC destiné à coopérer avec un terminal et UICC correspondant**

(71) Demandeur: Gemalto SA, 92190 Meudon (FR)
(72) Inventeur: Gros, Jean-François, 13012, MARSEILLE (FR)

(57) **Abrégé**

L'invention concerne un procédé de personnalisation d'un UICC destiné à coopérer avec un terminal. La personnalisation consiste à affecter un identifiant à l'UICC, par exemple un IMSI.

Selon l'invention, la personnalisation consiste à affecter à l'UICC un identifiant correspondant au type de terminal avec lequel il est destiné à coopérer.

## Description

Le domaine de l'invention est celui des radiocommunications à l'aide de terminaux embarquant des fonctionnalités SIM (pour " Subscriber Identity Module " ou " Module d'Identification de l'Abonné ").

L'invention s'applique notamment aux échanges avec des terminaux associés à des équipements distants de mesure, détection, traitement... (appelés également, en anglais communications " Machine To Machine " ou communications " M2M ").

Les communications M2M sont par exemple mises en oeuvre pour contrôler des machines distantes, par exemple des compteurs à gaz, des détecteurs de fuite de gaz ou de liquides, des détecteurs de niveau d'eau, des distributeurs automatiques, ou bien d'autres machines tels que des véhicules automobiles.

Classiquement, une fonctionnalité SIM est embarquée dans une puce comprise sur une carte SIM qui est un élément externe et amovible par rapport au terminal de communication auquel elle est associée. Elle a en effet pour objectif d'identifier un " abonné ", qui peut être conduit à changer de terminal sans vouloir changer son identifiant associé à la carte SIM. Celle-ci est donc disposée dans un logement prévu dans le terminal de communication. La carte SIM peut être changée physiquement dans la vie du terminal, par exemple afin d'obtenir plus de fonctionnalités ou pour changer d'opérateur.

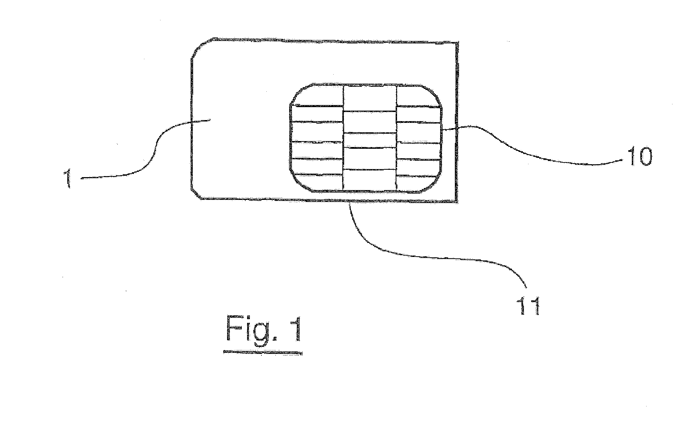

On présente, en relation avec la figure 1, un exemple de carte SIM classique. La puce 10 de la carte SIM 1 est disposée sur un substrat isolant 11.

Pendant la production des cartes SIM, dans une phase appelée personnalisation de la carte SIM, le fabricant procède à la mise en place dans la carte SIM des fonctions demandées par l'opérateur ainsi qu'au stockage des paramètres de l'opérateur (par exemple des clés secrètes, des algorithmes de cryptage,...).

Dans le cadre d'applications M2M, les modules de communication sont souvent :
- enfouis dans des équipements plus complexes (on peut citer par exemple le cas des modules enfouis dans une voiture ou une machine) ;
- enfouis et difficilement accessibles (on peut citer le cas des compteurs d'eau dans des zones géographiques reculées) ;
- soumis à des environnements hostiles en termes notamment de température, d'humidité ou de vibrations.

Ainsi, dans le domaine des communications M2M, les cartes SIM sont un maillon faible du dispositif de communication notamment du fait que les contraintes environnementales ne sont généralement pas supportées par les packagings standards des cartes SIM. En tout état de cause, la qualité du montage et des connexions est inférieure à celle de l'ensemble des autres composants du terminal.

Par ailleurs, les cartes SIM imposent une accessibilité au logement destiné à la recevoir. Cette accessibilité nécessaire peut complexifier sensiblement la réalisation du terminal et donc le rendre plus coûteux.

Dans le cadre de communications M2M, il a donc été préféré d'intégrer physiquement la fonctionnalité SIM dans une puce soudée directement sur un substrat, tel qu'un circuit imprimé d'un modem radio relié à la machine dont on veut contrôler ou piloter l'état. La « carte SIM » est ainsi solidarisée de façon définitive à un support relié au terminal de télécommunications et n'est plus accessible. On peut dès lors parler d'une SIM électronique (e-SIM) et non plus physique.

La présente invention s'applique notamment dans ce cadre de fonctionnalité SIM embarquée de manière fixe dans un terminal. Une fonctionnalité SIM embarquée dans un terminal, qu'elle soit ou non extractible de ce terminal, sera dans la suite de cette description appelée UICC (Universal Integrated Circuit Card).

Une des caractéristiques des communications M2M est que ce type de communications entre des machines embarquant des UICC et un réseau cellulaire de type GSM, 3G, LTE, etc...est amené à énormément s'amplifier dans les années à venir, afin de contrôler ou de vérifier à distance l'état de machines, compteurs, véhicules, alarmes, etc.

Le document présent à l'adresse http://www.efort.com/r_tutoriels/GSM1_EFORT.pdf décrit un réseau cellulaire de type GSM et est incorporé ici par référence.

A chaque UICC est traditionnellement associé un abonnement géré par l'opérateur du réseau de télécommunications. L'UICC est identifiée par un élément appelé HLR/AUC (Home location Register / Authentication Center) lors de sa tentative de connexion au réseau. Le HLR/AUC contient tous les identifiants, appelés IMSI (International Mobile Subscriber Identity), des UICC autorisés à se connecter au réseau. Une fois qu'un IMSI est reconnu au niveau du HLR/AUC, un droit de communication est attribué à cet UICC en fonction de l'abonnement correspondant.

Lors de cette tentative de connexion au réseau, un UICC transmet également un identifiant du terminal avec lequel il coopère. Cet identifiant de terminal est appelé IMEI (International Mobile Equipment Identity). L'authentification de l'IMEI par le HLR/AUC permet notamment d'identifier s'il est ou non inscrit sur une liste de terminaux auxquels l'accès est interdit, par exemple à la suite d'un vol de ce terminal.

La transmission de l'IMSI et de l'IMEI au HLR/AUC par l'UICC est réalisée classiquement, dans un réseau de type GSM, par la station de base (BTS) couvrant la cellule dans laquelle est situé le terminal, via respectivement une BSC (Base Station Controller) et un MSC (Mobile Switching Center).

L'inconvénient de cette solution existante est que le type de terminal dans lequel est compris l'UICC n'est connu qu'après authentification de l'IMEI au niveau du HLR/AUC.

De plus, le terminal doit avoir un IMEI, ce qui n'est pas toujours le cas, notamment dans le cadre d'applications M2M. II n'est dans ce cas pas possible de savoir dans quel type de terminal est compris l'UICC.

Enfin, un IMEI peut ne pas identifier un type de terminal donné. Par type de terminal, on entend par exemple une machine, un appareil photo, un téléphone portable, un ordinateur, un véhicule automobile,... et l'opérateur peut souhaiter différencier plusieurs types de terminaux, même si ceux-ci fonctionnent avec des modems identiques et/ou n'ont pas d'identifiant.

La présente invention a pour objectif de remédier à ces inconvénients.

Plus précisément, un des objectifs de l'invention est de permettre d'identifier le type de terminal dans lequel est compris un UICC avant que ce terminal ne soit authentifié par le HLR/AUC du réseau, par exemple grâce à son IMEI s'il en dispose.

À cet effet, la présente invention propose un procédé de personnalisation d'un UICC destiné à coopérer avec un terminal, cette personnalisation consistant à affecter un identifiant à l'UICC. Selon l'invention, la personnalisation consiste à affecter à l'UICC un identifiant correspondant au type de terminal avec lequel il est destiné à coopérer.

Dans un mode de mise en oeuvre avantageux, la personnalisation est réalisée avant d'intégrer l'UICC dans le terminal.

Dans un autre mode de mise en oeuvre, la personnalisation est réalisée après intégration de l'UICC dans le terminal.

Préférentiellement, l'invention consiste à rattacher l'UICC, lors de sa tentative de connexion à un réseau cellulaire, à un HLR spécifique traitant les authentifications des UICC intégrés dans des terminaux d'un même type.

Le HLR est soit pré-provisionné avec des UICC de même type, soit provisionné dynamiquement au moment de la première demande d'attachement avec des UICC de même type.

L'identifiant est de préférence un IMSI.

L'invention concerne également un UICC personnalisé selon ce procédé.

La présente invention sera mieux comprise la lecture de la description suivante d'un mode de réalisation, donné à titre illustratif et non limitatif, et des figures annexées dans lesquelles :
- la figure 1 représente une carte Sim;
- la figure 2 représente la fragmentation d'IMSI alloués à un opérateur en plusieurs séries, chaque série d'IMSI étant destinée à un terminal d'un type donné ;
- La figure 3 représente un réseau de transmission de données dans lequel est mise en oeuvre la présente invention.

La figure 1 a été décrite en référence à l'état de la technique.

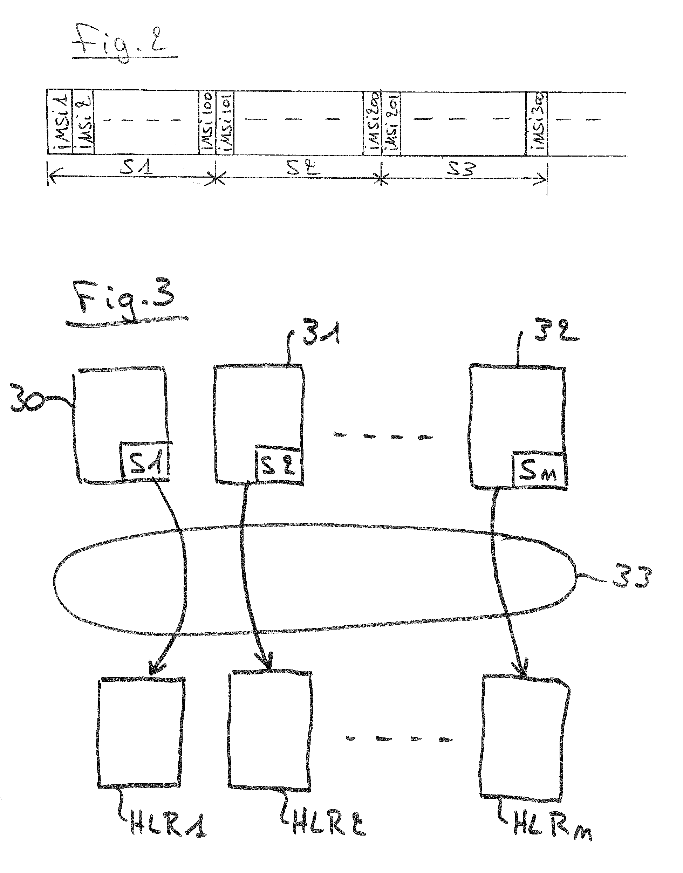

La figure 2 représente la fragmentation d'IMSI alloués à un opérateur en plusieurs séries, chaque série d'IMSI étant destinée à un terminal d'un type donné.

On suppose ici qu'un opérateur se voit allouer par une autorité de régulation des télécommunications (ART en France) un nombre très important d'IMSI. Il peut s'agir de plusieurs centaines de milliers, voire de plusieurs millions d'IMSI. Trois cent IMSI consécutifs sont ici représentés, référencés IMSI 1 à IMSI 300. L'opérateur désire par exemple utiliser ces IMSI pour des applications M2M, c'est-à-dire affecter ces IMSI à des UICC intégrées dans des machines de manière non amovible ou en tous cas destinées à ne pas être retirées comme des cartes SIM classiques. Les UICC sont à cet égard soit des cartes SIM (tel que représentée à la figure 1) soudées dans les machines à contrôler, soit des puces montées sur des cartes mères de machines que l'on souhaite contrôler à distance, via un réseau de télécommunications, par exemple de type cellulaire. Les UICC sont par exemple intégrés dans les modems intégrés dans ces machines.

Selon l'invention, les IMSI alloués à l'opérateur sont réservés à des UICC installés (ou devant être installés) dans des terminaux dont le type est connu à l'avance. Autrement dit, un UICC de terminal est personnalisé en fonction du type de terminal dans lequel il est intégré.

A titre d'exemple et comme représenté sur la figure 2, les IMSI notés IMSI 1 à IMSI 100 feront partie d'une série notée S1, les IMSI notés IMSI 101 à IMSI 200 feront partie d'une série notée S2 et les IMSI notés IMSI 201 à IMSI 300 feront partie d'une série notée S3. Les séries S1, S2 et S3 sont destinés à des terminaux de types différents. Par exemple, les IMSI (et donc les UICC renfermant ces IMSI) de la série S1 seront utilisés pour identifier des véhicules automobiles, les IMSI de la série S2 seront utilisés pour identifier des distributeurs de boissons et les IMSI de la série S3 seront utilisés pour identifier des ordinateurs portables.

Lors d'une tentative de connexion au réseau d'un terminal constitué par un véhicule automobile comprenant un UICC personnalisé avec un IMSI compris dans la série 1, l'IMSI transmis au réseau sera automatiquement reconnu par le MSC dont dépend la cellule dans laquelle se trouve ce véhicule comme étant un IMSI d'un véhicule. Le MSC est alors capable d'acheminer cette tentative de connexion vers un HLR/AUC dédié à la gestion des véhicules. De même, si un distributeur de boissons coopère avec un UICC ayant un IMSI situé dans la série S2, le MSC pourra diriger la tentative de connexion vers un HLR/AUC dédié à la gestion des distributeurs de boissons. Il en va de même pour les ordinateurs portables pour la série S3.

Ainsi, le réseau de télécommunications, en recevant simplement l'identifiant de l'UICC intégré dans un terminal, connaît de facto le type de terminal qui tente d'établir une communication et est capable d'acheminer la demande d'appel vers un HLR dédié qui saura l'authentifier. Il est dès lors possible de dédier des HLR/AUC à des types de terminaux spécifiques, ce qui permet non seulement de personnaliser les services rendus (un véhicule n'a pas les mêmes besoins qu'un distributeur de boissons ou qu'un ordinateur portable), mais également de dimensionner les HLR en fonction du nombre de types de terminaux sur le terrain. Par exemple, le dimensionnement (la taille mémoire) d'un HLR chargé de la gestion de distributeurs de boissons peut être prévu largement inférieur à celui d'un autre HLR chargé de la gestion de tous les véhicules d'une marque automobile.

Un autre exemple concerne la grande distribution : un fabriquant de téléphones portables peut insérer dans des journaux de grande diffusion des cartes SIM, grâce auxquelles des utilisateurs pourront bénéficier de bons d'achat dans certains magasins (un grand distributeur par exemple). Les IMSI de ces cartes SIM sont connus à l'avance par le fabricant de téléphones. Une étude de marché permet de savoir combien environ d'utilisateurs vont utiliser ces cartes et donc de dimensionner les HLR/AUC correspondants. Dans ce cas de figure, les UICC ne sont pas fixes mais constitués par des cartes SIM tel que représenté à la figure 1.

La méthode la plus simple d'affecter un IMSI à un UICC est de personnaliser ce dernier avant mise sur le marché, c'est-à-dire avant d'intégrer (de manière fixe) ou d'insérer (de manière amovible) l'UICC dans le terminal. Les HLR sont alors pré-provisionnés avec des UICC de même type. Il est cependant également possible de personnaliser l'UICC après son intégration dans le terminal, par un procédé connu sous le terme d' « IMSI swap ». Plus précisément, une fois l'UICC authentifié pour la première fois, et après que l'IMEI est connu, il est possible d'affecter dynamiquement, over the air, un IMSI a l'UICC en fonction du type de terminal. Ainsi dès la seconde demande d'attachement, l'authentification se fera avec un HLR spécifiquement prévu pour ce type de terminal.

De la même manière, les HLR peuvent être également provisionnés dynamiquement au moment de la première demande d'attachement, afin de stocker les IMSI d'UICC de même type (c'est-à-dire de la même série) dans un seul HLR.

La figure 3 représente un réseau de transmission de données dans lequel est mise en oeuvre la présente invention.

Dans cette figure, trois terminaux 30, 31 et 32 sont représentés. Le terminal 30 coopère avec un UICC de la série S1, le terminal 30 avec un UICC de la série S2 et le terminal 32 avec un UICC de la série Sn. Trois HLR sont également prévus : un HLR 1 est dédié à identifier les tentatives d'établissement des communications des terminaux comprenant des UICC de la série S1, un HLR 2 dédié à identifier les tentatives d'établissement des communications des terminaux comprenant des UICC de la série S2, et un HLR n dédié à identifier les tentatives d'établissement des communications des terminaux comprenant des UICC de la série Sn. Les tentatives de communications transitent par un ensemble 33 comprenant classiquement une ou plusieurs BTS, un ou plusieurs BSC et un ou plusieurs MSC. Le(s) MSC assure(nt) le routage des tentatives d'appel vers le HLR qui correspond à la série d'IMSI de l'appelant.

Le fait d'affecter à un type de terminal donné, qu'il soit fixe ou mobile, un UICC comprenant un identifiant connu à l'avance permet également de limiter le trafic car les appels sont directement aiguillés vers le HLR apte à répondre au mieux aux besoins du terminal appelant.

L'IMSI n'est pas nécessairement l'identifiant utilisé pour identifier un UICC. Il est par exemple possible d'utiliser le MSISDN qui correspond au numéro de téléphone de l'abonné ou l'ICCID qui est le numéro de série de l'UICC (et qui eux aussi sont uniques). On préfèrera néanmoins l'IMSI car le routage se fait dans le réseau (MSC/HLR) à partir de l'IMSI et l'aiguillage vers le HLR/AUC dédié est fait directement.

## Revendications

1. Procédé de personnalisation d'un UICC destiné à coopérer avec un terminal, ladite personnalisation consistant à affecter un identifiant audit UICC, **caractérisé en ce que** ladite personnalisation consiste à affecter audit UICC un identifiant correspondant au type de terminal avec lequel il est destiné à coopérer.

2. Procédé selon la revendication 1, **caractérisé en ce que** ladite personnalisation est réalisée avant d'intégrer ledit UICC dans ledit terminal.

3. Procédé selon la revendication 1, **caractérisé en ce que** ladite personnalisation est réalisée après intégration dudit UICC dans ledit terminal.

4. Procédé selon l'une des revendications 1 à 3, **caractérisé en ce qu'**il consiste à rattacher ledit UICC, lors de sa tentative de connexion à un réseau cellulaire, à un HLR spécifique traitant les authentifications des UICC intégrés dans des terminaux d'un même type.

5. Procédé selon la revendication 4, **caractérisé en ce que** ledit HLR est pré-provisionné avec des UICC de même type.

6. Procédé selon la revendication 4, **caractérisé en ce que** ledit HLR est provisionné dynamiquement au moment de la première demande d'attachement avec des UICC de même type.

7. Procédé selon l'une des revendications 1 à 6, **caractérisé en ce que** ledit identifiant est un IMSI.

8. UICC personnalisé selon l'une des revendications 1 à 7.
